(19) Europäisches Patentamt
European Patent Office
Office européen des brevets

(11) Publication number: **0 426 155 A2**

(12) # EUROPEAN PATENT APPLICATION

(21) Application number: **90120907.2**

(51) Int. Cl.$^5$: **A23D 9/00**, A23G 1/00

(22) Date of filing: **31.10.90**

(30) Priority: **31.10.89 JP 284249/89**

(43) Date of publication of application: **08.05.91 Bulletin 91/19**

(84) Designated Contracting States: **CH DE ES FR GB LI NL**

(71) Applicant: **KAO CORPORATION**
**14-10, Nihonbashi Kayabacho 1-chome**
**Chuo-ku Tokyo(JP)**

(72) Inventor: **Higashioka, Hiroshi**
**8-4-503, Onohara 1-chome, Kamisu-machi**
**Kashima-gun, Ibaraki(JP)**
Inventor: **Sano, Yoshito**
**Hasaki-shataku 4-203, 9809-6, Doaihoncho 4-chome**
**Hasaki-machi, Kashima-gun, Ibaraki(JP)**
Inventor: **Tanaka, Yukitaka**
**8762-23, Doaihoncho 1-chome, Hasaki-machi**
**Kashima-gun, Ibaraki(JP)**

(74) Representative: **Hansen, Bernd, Dr. Dipl.-Chem. et al**
**Hoffmann, Eitle & Partner Patent- und Rechtsanwälte Arabellastrasse 4**
**W-8000 München 81(DE)**

(54) **Hard butter composition.**

(57) A hard butter composition is disclosed, which comprises a triglyceride component comprising triglycerides having unsaturated fatty acid residue at the 2-position and a diglyceride component comprising at least one diglyceride having at least two unsaturated bonds in one molecule. The hard butter composition is stable to heat at around its melting point and soft at a low temperature range and, also, has a heat resistance, a bloom resistance and a softnes in chewing when used as a component of chocolates.

EP 0 426 155 A2

# HARD BUTTER COMPOSITION

## FIELD OF THE INVENTION

This invention relates to a hard butter composition. More particularly, this invention relates to a hard butter composition which is stable to heat at a high temperature range and soft at a low temperature range and, especially, has a heat resistance, a bloom resistance and a softness for chewing when it is applied to chocolates.

## BACKGROUND OF THE INVENTION

Hard butters as represented, for example, by cacao butter are being used widely in the food industry, such as confectionery and bakery products, mainly chocolates, as well as in the pharmaceutical and cosmetic fields.

Such hard butters contain triglycerides having one unsaturated bond in one molecule (to be referred to as "S2U" hereinafter) as a major component. Such triglycerides include 1,3-dipalmitoyl-2-oleoyl glycerol (to be referred to as "POP" hereinafter), 1-palmitoyl-2-oleoyl-3-stearoyl glycerol (to be referred to as "POSt" hereinafter) and 1,3-distearoyl-2-oleoyl glycerol (to be referred to as "StOSt" hereinafter).

In general, natural oils and fats rich in S2U components, such as fractionated natural oils including palm oil, shea butter and sal fat, or fractionated oils rich in the S2U components obtained by an enzyme-aided selective interesterification, are used as a source of S2U alone or in combination, as appropriate for the desired characteristics of hard butter compositions so produced.

A characteristic feature of hard butter is a narrow range of plasticity so that it can maintain sufficient hardness at room temperature or below, but melts quickly when the temperature increases close to body temperature.

In spite of many superior properties, hard butter products have some disadvantages in practical use. One of the most serious problems is that the thermal stability of hard butter products at a high temperature range is incompatible with maintaining suitable softness at a low temperature range.

The terms "high temperature range" and "low temperature range" as used herein refer to a range from room temperature to around melting point of hard butter and a range from about 5 to 20 °C, respectively.

In addition, hard butter products containing S2Us as a major component, which has a narrow range of plasticity and is also characterized by a capacity to melt quickly, loses these desired qualities when it is kept at, or exposed to high temperatures. In other words, the structure of such hard butter products becomes uneven at high temperatures due to either partial or mutual melting, or transition or growth of oil and fat crystals owing to their polymorphism. Such uneven structures subsequently causes decrease in the thermal stability of hard butter products, such as heat resistance, bloom resistance and shape-keeping ability and also cause solid-liquid separation, thus resulting in the deterioration of desirable qualities of hard butter products. Hard butter products also have disadvantages at low temperatures, such as becoming too hard to chewing when tasted because of the increase in the crystal contents and hardness, or developing cracks and inferior appearance.

Combined use of various oils and fats having high melting points and fractioned oils of shea butter and sal fat (both of which are rich in StOSt which has higher melting point among S2U components) have been tested in order to improve thermal stabilities of hard butter at high temperatures. In such cases, however, not only the hardness of hard butter at room temperature or below increases or its softness decreases, but also the capacity to melt quickly is reduced.

For the purpose of improving softness of the hard butter product at a low temperature range, addition of liquid oils such as rapeseed oil and cotton seed oil has been attempted as disclosed, for example, in Chocolate Cocoa Seizo-no Riron-to Jissai (Theory and Practice for the Production of Chocolate and Cocoa, written in Japanese), pages 248 to 251, 1965, published by Korin Shoin. In this approach, however, the softness of products at high temperatures increases and the heat resistance and bloom resistance decreases.

As a result, the present state in the art is that the balance among heat resistance, bloom resistance and softness of hard butter as compromised by a combined use of high melting point fat and oil and liquid oil (for example, JP-A-59-135841 and JP-A-60-27341; the term "JP-A" as used herein means an "unexamined

published Japanese patent application").

## SUMMARY OF THE INVENTION

Under these circumstances, the present inventors have conducted extensive studies and as a result, they found that a hard butter composition which comprises a mixture of triglycerides having specific compositions and at least one diglyceride having at least two unsaturated bonds per molecule, can impart a remarkable effect of simultaneously improving heat resistance and bloom resistance at high temperature ranges and softness at low temperature ranges.

Accordingly, the present invention provides a hard butter composition which comprises:

(a) from about 30 to about 95% by weight, based on the total weight of the composition, of a triglyceride component comprising a first triglyceride and a second triglyceride each having an unsaturated fatty acid residue at the 2-position and represented, respectively, by the following formulae (1) and (2):

$$\begin{array}{l} CH_2OR^1 \\ | \\ CHOR^2 \\ | \\ CH_2OR^3 \end{array} \qquad (1)$$

$$\begin{array}{l} CH_2OR^3 \\ | \\ CHOR^2 \\ | \\ CH_2OR^3 \end{array} \qquad (2)$$

wherein $R^1$ represents palmitic acid residue, $R^2$ represents an unsaturated fatty acid residue having 16 to 22 carbon atoms and $R^3$ represents a saturated fatty acid residue having 18 to 22 carbon atoms,

in a weight ratio of the second triglyceride to the first triglyceride of at least about 0.5; and

(b) from about 5 to about 70 % by weight, based on the total weight of the composition, of a diglyceride component comprising at least one diglyceride having at least two unsaturated bonds per one molecule.

Preferably, the triglyceride component (a) may comprise a triglyceride (A), a triglyceride (B) and a triglyceride (C), with the total number of carbon atoms in the constituting fatty acid residues being 50, 52, and 54 to 62, for (A), (B) and (C), respectively, wherein the weight ratio of ((B) + (C))/(A) is at least about 4.0 and the weight ratio of (C)/(B) is at least about 0.5. Also preferably, an (X)/(Y) weight ratio in the triglyceride component (a) may be at least about 1.3, provided that (X) represents the content of saturated fatty acid residues having 18 to 22 carbon atoms and (Y) represents the content of palmitic acid residues. The hard butter composition of the present invention may contain a diglyceride having one or no unsaturated bond per molecule in an amount of, preferably, less than 5% by weight. Other objects and advantages of the present invention will be made apparent from the detailed description presented below.

## DETAILED DESCRIPTION OF THE INVENTION

The hard butter composition of the present invention essentially comprises a triglyceride component comprising a group of triglycerides having unsaturated fatty acid residues at the 2-position (S2U; to be referred to as "component (a)" hereinafter) and a diglyceride component comprising at least one diglyceride having at least two unsaturated bonds per one molecule (to be referred to as "component (b)" hereinafter). In accordance with the present invention, a mixture of the first and the second S2U triglycerides are used as the component (a), said triglycerides being represented, respectively, by the following formulae (1) and (2):

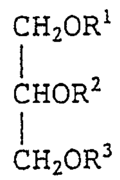

(1)

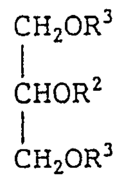

(2)

wherein $R^1$ represents palmitic acid residue, $R^2$ represents an unsaturated fatty acid residue having 16 to 22 carbon atoms and $R^3$ represents a saturated fatty acid residue having 18 to 22 carbon atoms.

Triglyceride component (a) is contained in the hard butter composition of the present invention in an amount of from about 30 to about 95% by weight, preferably from about 50 to about 95% by weight, and more preferably from about 70 to about 95% by weight based on the total weight of the composition.

Preferred examples of the unsaturated fatty acid residue represented by $R^2$ include, for example, oleic acid residue and linoleic acid residue, while preferred examples of the saturated fatty acid residue represented by $R^3$ include, for example, palmitic acid residue, stearic acid residue, arachidonic acid residue and behenic acid residue.

Heat resistance of the hard butter composition may not be sufficient when a weight ratio of the second triglyceride of formula (2) to the first triglyceride of formula (1) is less than about 0.5. Heat resistance of the hard butter composition may also become inferior when a total content of triglycerides, as represented by formulae (1) and (2), in the hard butter composition is less than about 30% by weight. Application of the hard butter composition which comprises such a component (a), as a component of chocolate and the like products may improve not only heat resistance of the product, but also improve the compounding capacity with cacao butter remarkably.

According to the present invention, at least one diglyceride having at least two unsaturated bonds per molecule is contained in the hard butter composition as the component (b) in an amount of about 5 to about 70% by weight, preferably from about 5 to about 50% by weight, more preferably from about 5 to about 30% by weight, based on the total weight of the composition. When diglyceride component (b) does not have at least two unsaturated bonds per molecule, not only is softness of such the hard butter composition unattainable at low temperature ranges, but also heat resistance and melting capacity at high temperature ranges may decrease. A small amount of a diglyceride having one or no unsaturated bond per molecule may be contained in the present hard butter composition, but preferably in an amount of less than about 5% by weight based on the total weight of the hard butter composition.

As to fatty acids which constitute diglyceride component (b), unsaturated fatty acids having 16 to 22 carbon atoms are preferable, and the content of such the fatty acids may preferably be at least about 70% by weight based on the total weight of fatty acid residues in the diglycerides.

For the purpose of further improving bloom resistance and softness for chewing, which are also the objects of the present invention, triglycerides in the hard butter composition may preferably have the following structural properties.

Triglyceride component (a) of hard butter compositions of the present invention may comprise:
a triglyceride (A) having a total number of carbon atoms in the constituting fatty acid residues of 50;
a triglyceride (B) having a total number of carbon atoms in the constituting fatty acid residues of 52; and
a triglyceride (C) having a total number of carbon atoms in the constituting fatty acid residues of from 54 to 62;
wherein a weight ratio of ((B) + (C))/(A) is at least about 4.0 and a weight ratio of (C)/(B) is at least about 0.5. In addition, an (X)/(Y) weight ratio in the triglyceride component is at least about 1.3, provided that (X) represents the content of the saturated fatty acid residues (i.e., the fatty acid residue represented by $R^3$) having 18 to 22 carbon atoms and (Y) represents the content of palmitic acid residue.

Preferred examples of component (a) for use in the hard butter composition of the present invention are a mixture of 1-palmitoyl-2-oleoyl-3-stearoyl glycerol (POSt) and 1,3-distearoyl-2-oleoyl glycerol (StOSt). Other triglycerides having higher melting points, such as 1-palmitoyl-2-oleoyl-3-behenoyl glycerol (POB), 1-stearoyl-2-oleoyl-3-arachidonoyl glycerol (StOA), 1-stearoyl-2-oleoyl-3-behenoyl glycerol (StOB) and 1,3-dibehenoyl-2-oleoyl glycerol (BOB), may also be used as admixtures as required (P: palmitic acid residue; O: oleic acid residue; St: stearic acid residue; A: arachidonic acid residue; and B: behenic acid residue). Admixing with 1-palmitoyl-2- linoleoyl-3-stearoyl glycerol (PLSt), 1,3-distearoyl-2-linoleoyl glycerol (StLSt), 1-palmitoyl-2-linoleoyl-3-behenoyl glycerol (PLB), 1-stearoyl-2-linoleoyl-3-behenoyl glycerol (StLB) and 1,3-dibehenoyl-2-linoleoyl glycerol (BLB) may also be effective to adjust hardness and softness (L: linoleic acid residue). When triglyceride component (a) contains palmitic acid residue and stearic acid residue as major saturated fatty acid residues, a mixture of POSt and StOSt, which comprises not more than about 10% by weight of POP, from about 10 to about 50% by weight of POSt and from about 30 to 70% by weight of StOSt is preferred.

Preferred examples of diglyceride component (b) for use in the hard butter composition of the present invention are those obtained by enzymatic or chemical treatment of rapeseed oil, soybean oil, sunflower oil, safflower oil and the like oil which contains relative high amount of oleic acid, linoleic acid or linolenic acid. Specific examples thereof include dioleoyl glycerol, dilinoleoyl glycerol and oleoyl linoleoyl glyceride.

These two types of glyceride components (a) and (b) for use in the hard butter composition of the present invention may be prepared from natural oil and fat, oil and fat obtained by an enzyme-aided selective interesterification, fractionated products of selective esterification, by fraction or other isolation techniques or chemical synthesis. Preferably, these glyceride components can be easily prepared by making use of a selective enzyme reaction.

For example, S2U as component (a) may be obtained by a 1,3-specific interesterification reaction of a triglyceride having an unsaturated fatty acid, such as oleic acid, linoleic acid or linolenic acid, on its 2-position with a fatty acid, selected from the group consisting of palmitic acid, stearic acid, arachidonic acid and behenic acid or esters thereof, in the presence of a lipase having a substrate specificity for 1,3-positions of the glyceride. Such lipases may be selected, e.g., from Aspergillus lipases, Mucor lipases and Rhizopus lipases.

Diglyceride component (b), having at least two unsaturated bonds per molecule may be obtained by a 1,3-specific esterification reaction of an unsaturated fatty acid such as oleic acid or linoleic acid with glycerol in the presence of a lipase having substrate specificity for the 1,3-position of similar glyceride.

Preparation of such glyceride may be performed in accordance with known methods as disclosed, for example, in JP-A-55-71797 (corresponding to U.S. Patent 4,268,527) and JP-A-64-71495.

The hard butter composition of the present invention not only comprise the foregoing S2U component (a) and diglyceride component (b) as major glyceride components, but also may comprise incidental impurities of other glyceride components. As the matter of course, it is preferable to minimize content of such impurity glyceride components, but their presence in small amounts may be allowable, provided that they do not hinder the desired effects of the hard butter composition of the present invention.

Preferred embodiments of the hard butter composition of the present invention are mentioned below. However, diglycerides and triglycerides other than those mentioned therein may optionally be contained in the hard butter composition as required, and hence, the present invention is not construed to be limited thereby.

One preferred embodiment of a hard butter composition according to the present invention is comprising from about 30% by weight of dioleoyl glycerol, from about 7 to about 35% by weight of POSt and from about 35 to about 63% by weight of StOSt. In this embodiment, dioleoyl glycerol can be replaced by oleoyl linoleoyl glycerol or dilinoleoyl glycerol to improve softness at low temperatures.

Another preferred embodiment of a hard butter composition according to the present invention is comprising from about 5 to about 30% by weight of dioleoyl glycerol, from about 30 to about 70% by weight of StOSt and from about 5 to about 20% by weight of BOB.

The hard butter composition of the present invention is effectively used as an oil base for various field where conventional hard butter has been used, for example, foods, pharmaceuticals, cosmetics and the like. In particular, the hard butter composition of the present invention provides improved properties at use in a chocolate product, especially in a chocolate bar or a shell chocolate.

Although the content of the hard butter composition in the hard butter-containing product, especially a chocolate product, is not particularly limited, the hard butter composition of the present invention may be contained, for example, in the chocolate product in an amount of from about 5 to about 50% by weight, preferably from about 5 to about 30% by weight, based on the total weight of the product.

If suitable, the hard butter composition of the present invention can be used in combination with commonly used hard butter products. In such the case, the effect of the prior art product may be improved further in terms of heat and bloom resistances while maintaining softness at low temperatures.

Examples and comparative examples of the present invention are given below by way of illustration, and not by way of limitation. Unless otherwise indicated, all percents and parts referred to herein are by

weight.

Preparation of triglyceride samples:

(1) In 2500 parts of n-hexane were dissolved 500 parts of a middle melting point fraction of palm oil (iodine value: 32) and 1000 parts of a commercial stearic acid preparation (purity: 98%). The resulting solution was mixed with 80 parts of sellaite to which 25 parts of Rhizopus delemar lipase (manufactured by Amano Pharmaceutical Co., Ltd.) had been adsorbed, and the mixture was then stirred at 40°C for 3 days in a sealed vessel to complete interesterification reaction.

After removing the enzyme from the reaction system by filtration and subsequent removal of n-hexane by distillation under reduced pressure, the crude reaction products thus obtained were subjected to deoxidation using a thin film molecular distillation apparatus under a condition of 180°C/0.05 Torr to obtain 480 parts of the reaction product.

By purifying 400 parts of the thus obtained reaction product by means of a column chromatography using 2000 parts of silica gel, 345 parts of triglyceride were obtained. 300 parts of the triglyceride were then dissolved in 1500 parts of n-hexane. The resulting solution was fractionated by cooling to 8°C and to -10°C at the cooling rate of 0.5°C/min. and maintained at these temperatures for 3 hours, respectively, followed by separating the crystals precipitated and the solution, to obtain a middle melting point fraction (S2U sample No. 1; yield: 48.5%).

(2) After dissolving 1500 parts of an equally mixed mixture of olive oil (iodine value: 82), a commercial palmitic acid preparation (purity: 95%) and a commercial stearic acid (purity: 98%) in 3000 parts of n-hexane, interesterification and deoxidation were performed in the same manner as described above in (1) to obtain 470 parts of a reaction product.

By purifying 400 parts of the thus obtained reaction product by means of a column chromatography as described in (1) above, 325 parts of triglyceride were obtained. The thus obtained triglyceride was dissolved in n-hexane and the resulting solution was fractionated to obtain a middle melting point fraction (S2U sample No. 2; yield: 32.2%).

(3) After dissolving 500 parts of a middle melting point fraction of shea butter (iodine value: 31) and 300 parts of a commercial stearic acid (purity: 98%) in 1000 parts of n-hexane, interesterification and deoxidation were performed in the same manner as described above in (1) to obtain 470 parts of a reaction product.

By purifying 400 parts of the thus obtained reaction product by means of a column chromatography as described in (1) above, 360 parts of triglyceride were obtained. The thus obtained triglyceride (300 parts) was dissolved in n-hexane and the resulting solution was fractionated to obtain a middle melting point fraction (S2U sample No. 3; yield: 72.8%).

(4) After dissolving 500 parts of a middle melting point fraction of palm oil (iodine value: 32), 500 parts of a commercial stearic acid (purity: 98%) and 500 parts of a commercial behenic acid (purity: 90%) in 3000 parts of n-hexane, interesterification and deoxidation were performed in the same manner as described above in (1) to obtain 480 parts of a reaction product.

By purifying 400 parts of the thus obtained reaction product by means of a column chromatography as described in (1) above, 330 parts of triglyceride were obtained. The thus obtained triglyceride was dissolved in n-hexane and the resulting solution was fractionated to obtain a middle melting point fraction (S2U sample No. 4; yield: 54.5%).

(5) After dissolving 1500 parts of an equally mixed mixture of safflower oil (iodine value: 145), stearic acid (purity: 98%) and behenic acid (purity: 90%) in 3000 parts of n-hexane, interesterification and deoxidation were performed in the same manner as described above in (1) to obtain 440 parts of a reaction product.

By purifying 400 parts of the thus obtained reaction product by means of a column chromatography as described in (1) above, 330 parts of triglyceride were obtained. The thus obtained triglyceride was dissolved in n-hexane and the resulting solution was fractionated to obtain a middle melting point fraction (S2U sample No. 5; yield: 34.3%).

(6) After dissolving 500 parts of a middle melting point fraction of palm oil (iodine value: 32) and 300 parts of a commercial palmitic acid (purity: 95%) in 1000 parts of n-hexane, interesterification and deoxidation were performed in the same manner as described above in (1) to obtain 470 parts of a reaction product.

By purifying 400 parts of the thus obtained reaction product by means of a column chromatography as described in (1) above, 370 parts of triglyceride were obtained. 300 parts of thus obtained triglyceride was

dissolved in n-hexane and the resulting solution was fractionated to obtain a middle melting point fraction (S2U sample No. 6; yield: 54.5%).

Preparation of diglyceride samples:

(7) A mixture of 500 parts of a rapeseed oil hydrolyzate (contents: palmitic acid: 4%; stearic acid: 2%; oleic acid: 60%; linoleic acid: 21%; and linolenic acid: 12%), 80 parts of purified glycerol and 100 parts of a commercial preparation of Mucor miehei lipase was stirred at 40 °C for 8 hours under reduced pressure to complete esterification reaction.

After deoxidation treatment of the reaction product, 430 parts of an esterification product was obtained. Thereafter, 400 parts of the esterification product was subjected to a column chromatography using 2000 parts of silica gel to obtain 315 parts of a diglyceride (diglyceride sample No. 1).

Compositions of triglycerides prepared in the foregoing (1) to (6), and those of diglyceride prepared in (7) are shown in Tables 1, and 2 and 3, respectively.

TABLE 1

Triglyceride Compositions (% by weight)

| | S2U Sample No. | | | | | |
|---|---|---|---|---|---|---|
| | 1 | 2 | 3 | 4 | 5 | 6 |
| SUS*1) Content | 94.2 | 91.1 | 95.3 | 89.3 | 91.4 | 94.8 |
| SUS Composition*2) | | | | | | |
| 48 | 1.1 | 0.1 | 0.0 | 0.2 | 0.0 | 1.6 |
| 50 | 6.6 | 13.3 | 1.6 | 7.0 | 0.4 | 83.3 |
| 52 | 33.9 | 45.5 | 10.3 | 13.1 | 1.8 | 12.8 |
| 54 | 56.8 | 39.1 | 79.5 | 19.2 | 18.5 | 1.7 |
| 56 | 1.0 | 0.6 | 5.1 | 14.3 | 3.5 | 0.1 |
| 58 | 0.1 | 0.2 | 2.1 | 18.8 | 37.7 | 0.0 |
| 60 | 0.0 | 0.0 | 0.2 | 3.7 | 4.8 | 0.0 |
| 62 | 0.0 | 0.0 | 0.0 | 19.9 | 31.1 | 0.0 |
| the rest | 0.6 | 1.2 | 1.2 | 3.8 | 2.2 | 0.5 |
| X/Y*3 | 3.4 | 2.7 | 18.6 | 12.5 | 107.3 | 1.27 |
| (2)/(1)*4 | 1.7 | 0.9 | 8.4 | 2.5 | 47.8 | 0.2 |

Notes; *1): SUS, triglycerides having unsaturated fatty acid residue at 2-position and saturated fatty acid residues at 1- and 3-positions.

*2): Glyceride composition of SUS in terms of the number of total carbon atoms in fatty acid residue (48: MOP; 50: POP; 52: POSt; 54: StOSt and POA; 56: AOSt and POB; 58: AOA and StOB; 60: AOB; and 62: BOB; M: myristic acid residue;

P, O, St, A and B, fatty acid residues described in the foregoing).

*3): Weight ratio of the content of saturated fatty acid having 18 to 22 carbon atoms (X) to the content of palmitic acid (Y), both as the member of triglyceride component (a) in SUS. The triglyceride component (a) comprises the following formulae (1) and (2) as defined in this invention.

$CH_2OR^1$
|
$CHOR^2$ (1)
|
$CH_2OR^3$

$CH_2OR^3$
|
$CHOR^2$ (2)
|
$CH_2OR^3$

wherein R1 is palmitic acid residue, R2 is an unsaturated fatty acid residue having 16 to 22 carbon atoms and R3 is a saturated fatty acid residue having 18 to 22 carbon atoms.

*4) Weight ratio of the second triglyceride of formula (2) to the first triglyceride of formula (1).

TABLE 2

| Fatty Acid Composition of Diglyceride (% by weight) | |
|---|---|
| Fatty Acid | Content |
| Palmitic acid | 3.6 |
| Stearic acid | 1.5 |
| Oleic acid | 57.8 |
| Linoleic acid | 22.1 |
| Linolenic acid | 9.0 |
| Other fatty acid | q.s. |

TABLE 3

| Diglyceride Composition (% by weight) | |
|---|---|
| Diglycerides*1) | Diglyceride Sample No. 1 |
| DG/U0 | 0.4 |
| DG/U1 | 6.8 |
| DG/U2 | 92.8 |
| Note; | |

*1) : DG/U0, diglyceride having no unsaturated bond in one molecule; DG/U1, diglyceride having one unsaturated bond in one molecule; and DG/U2, diglyceride having two unsaturated bonds in one molecule.

EXAMPLES 1 TO 8 AND COMPARATIVE EXAMPLES 1 TO 4

Table 3 shows combination ratio of glyceride in the hard butter composition which comprises combining the foregoing triglyceride component (a) and diglyceride component (b). In the Comparative Examples 1 to 3, rapeseed oil which has similar fatty acid composition to the diglyceride sample No. 1 was used as a triglyceride source instead of the diglyceride sample No. 1.

TABLE 3

| | Composition of Glyceride | (Mixing Ratio) |
|---|---|---|
| Example 1 | S2U-1/diglyceride sample No. 1 | (80/20) |
| Example 2 | S2U-1/diglyceride sample No. 1 | (50/50) |
| Example 3 | S2U-1/diglyceride sample No. 1 | (30/70) |
| Comparative Example 1 | S2U-1/rapeseed oil | (80/20) |
| Comparative Example 3 | S2U-1/rapeseed oil | (50/50) |
| Comparative 3 | S2U-1/rapeseed oil | (30/70) |
| Example 4 | S2U-2/diglyceride sample No. 1 | (80/20) |
| Example 5 | S2U-2/diglyceride sample No. 1 | (50/50) |
| Example 6 | S2U-3/diglyceride sample No. 1 | (50/50) |
| Example 7 | S2U-4/diglyceride sample No. 1 | (80/20) |
| Example 8 | S2U-5/diglyceride sample No. 1 | (80/20) |
| Comparative Example 4 | S2U-6/diglyceride sample No. 1 | (50/50) |

Using each of the hard butter compositions obtained in Examples 1 to 8, and Comparative Examples 1 to 4, as shown in Table 3, chocolate samples were prepared under the following mixing conditions and performance of each hard butter composition containing product was evaluated.

| Chocolate composition: | |
|---|---|
| Cocao powder (oil: 11%) | 15 parts |
| Hard butter | 35 parts |
| Sucrose | 40 parts |
| Skim milk | 10 parts |
| Lecithin | 0.3 part |

Performance evaluation of chocolate samples:

Each chocolate sample was stored for 12 hours at a temperature lower, by a unit of 1 °C, than the stable melting point of a hard butter composition used in the chocolate sample, followed by the additional storage at 10 °C for 12 hours. After repeating such a temperature shifting cycle for one month, oil-off prevention capacity and bloom resistance were evaluated based on the resulting conditions of each chocolate sample. Cacao butter was used as a control and results of the evaluation of each sample were expressed by setting those of cacao butter as "±". Results of the evaluation are shown in Table 4

TABLE 4

| Hard Butter Composition Used | Bloom Resistance | Oil-off Prevention Capacity |
|---|---|---|
| Example 1 | + + | + + |
| Example 2 | + + | + + |
| Example 3 | + + | + + |
| Comparative Example 1 | - | - |
| Comparative Example 2 | - | - - |
| Comparative Example 3 | - | - |
| Example 4 | + + | + + |
| Example 5 | + | + + |
| Example 6 | + | + + |
| Example 7 | + + | + |
| Example 8 | + | + + |
| Comparative Example 4 | - | - |

Symbols in the table explain the effect as follows.
+ + : has a remarkable effect compared to cacao butter.
+ : has an effect compared to cacao butter.
- : has substantially no effect compared to cacao butter.
- - : has completely no effect compared to cacao butter.

Results of the evaluation:

As is presented above in table 4, sequential comparison of Examples 1 to 3 and Comparative Examples 1 to 3 clearly show that the presence of the diglyceride composition according to the present invention results in remarkable improvement of thermal stabilities in terms of the oil-off preventing capacity and bloom resistance, in comparison with the case of cacao butter, while liquid rapeseed oil as a substitute for the diglyceride component shows inferior performances. Also, sequential comparison of Examples 2, 5 and 6 and Comparative Example 4 shows that POSt and StOSt are more effective among the triglyceride components having one unsaturated bond in one molecule.

Thus, it is apparent that there has been provided, in accordance with the present invention, a hard butter composition which is stable to heat at high temperature ranges (around melting point) and soft at low temperature ranges and, especially, has a heat resistance, a bloom resistance and a softness in chewing when it is a component of chocolates.

While the invention has been described in detail and with reference to specific examples thereof, it will be apparent to one skilled in the art that various changes and modifications can be made therein without departing from the spirit and scope thereof.

**Claims**

1. A composition which comprises:
(a) about 30 to about 95% by weight, based on the total weight of the composition, of a triglyceride component comprising a first triglyceride and a second triglyceride each having an unsaturated fatty acid residue at the 2-position and represented, respectively, by following formulae (1) and (2):

$CH_2OR^1$
|
$CHOR^2$ (1)
|
$CH_2OR^3$

$CH_2OR^3$
|
$CHOR^2$ (2)
|
$CH_2OR^3$

wherein $R^1$ is a palmitic acid residue, $R^2$ is said unsaturated fatty acid residue having 16 to 22 carbon atoms and $R^3$ is a saturated fatty acid residue having 18 to 22 carbon atoms,

in a weight ratio of said second triglyceride to said first triglyceride of at least about 0.5; and

(b) about 5 to about 70% by weight, based on the total weight of the composition, of a diglyceride component comprising at least one diglyceride having at least two unsaturated bonds per molecule.

2. A composition of claim 1, wherein said triglyceride component comprises:

a triglyceride (A) having a total number of carbon atoms in the constituting fatty acid residues of 50;

a triglyceride (B) having a total number of carbon atoms in the constituting fatty acid residues of 52; and a triglyceride (C) having a total number of carbon atoms in constituting fatty acid residues of from 54 to 62, wherein a weight ratio of ((B) + (C))/(A) is at least about 4.0 and a weight ratio of (C)/(B) is at least about 0.5.

3. A composition of claim 1, wherein an (X)/(Y) weight ratio in said triglyceride component is at least about 1.3, provided that (X) represents the content of said saturated fatty acid residue having 18 to 22 carbon atoms and (Y) represents the content of palmitic acid residues.

4. A composition of claim 1, wherein a diglyceride having one or no unsaturated bond per molecule is contained in said hard butter composition in an amount of less than about 5% by weight.

5. Use of a composition according to any of claims 1 to 4 for the preparation of hard butter.

Claims for the following Contracting State: ES

1. A method for preparing a composition comprising: mixing

(a) about 30 to about 95% by weight, based on the total weight of the composition, of a triglyceride component comprising a first triglyceride and a second triglyceride each having an unsaturated fatty acid residue at the 2-position and represented, respectively, by following formulae (1) and (2):

$CH_2OR^1$
|
$CHOR^2$ (1)
|
$CH_2OR^3$

$CH_2OR^3$
|
$CHOR^2$ (2)
|
$CH_2OR^3$

wherein $R^1$ is a palmitic acid residue, $R^2$ is said unsaturated fatty acid residue having 16 to 22 carbon atoms and R3 is a saturated fatty acid residue having 18 to 22 carbon atoms,

in a weight ratio of said second triglyceride to said first triglyceride of at least about 0.5; and

(b) about 5 to about 70% by weight, based on the total weight of the composition, of a diglyceride component comprising at least one diglyceride having at least two unsaturated bonds per molecule.

2. A method for preparing a composition according to claim 1, wherein said triglyceride component comprises:

a triglyceride (A) having a total number of carbon atoms in the constituting fatty acid residues of 50;

a triglyceride (B) having a total number of carbon atoms in the constituting fatty acid residues of 52; and a triglyceride (C) having a total number of carbon atoms in constituting fatty acid residues of from 54 to 62, wherein a weight ratio of ((B) + (C))/(A) is at least about 4.0 and a weight ratio of (C)/(B) is at least about 0.5.

3. A method for preparing a composition according to claim 1, wherein an (X)/(Y) weight ratio in said triglyceride component is at least about 1.3, provided that (X) represents the content of said saturated fatty acid residue having 18 to 22 carbon atoms and (Y) represents the content of palmitic acid residues.

4. A method for preparing a composition according to claim 1, wherein a diglyceride having one or no unsaturated bond per molecule is contained in said hard butter composition in an amount of less than about 5% by weight.

5. Use of a composition prepared according to any of claims 1 to 4 for the preparation of hard butter.

6. A hard butter composition which comprises:

(a) about 30 to about 95% by weight, based on the total weight of the composition, of a triglyceride component comprising a first triglyceride and a second triglyceride each having an unsaturated fatty acid residue at the 2-position and represented, respectively, by following formulae (1) and (2):

$$\begin{array}{l} CH_2OR^1 \\ | \\ CHOR^2 \\ | \\ CH_2OR^3 \end{array} \qquad (1)$$

$$\begin{array}{l} CH_2OR^3 \\ | \\ CHOR^2 \\ | \\ CH_2OR^3 \end{array} \qquad (2)$$

wherein $R^1$ is a palmitic acid residue, $R^2$ is said unsaturated fatty acid residue having 16 to 22 carbon atoms and $R^3$ is a saturated fatty acid residue having 18 to 22 carbon atoms,

in a weight ratio of said second triglyceride to said first triglyceride of at least about 0.5; and

(b) about 5 to about 70% by weight, based on the total weight of the composition, of a diglyceride component comprising at least one diglyceride having at least two unsaturated bonds per molecule.

7 . A hard butter composition of claim 6, wherein said triglyceride component comprises:

a triglyceride (A) having a total number of carbon atoms in the constituting fatty acid residues of 50;

a triglyceride (B) having a total number of carbon atoms in the constituting fatty acid residues of 52; and a triglyceride (C) having a total number of carbon atoms in constituting fatty acid residues of from 54 to 62, wherein a weight ratio of ((B) + (C))/(A) is at least about 4.0 and a weight ratio of (C)/(B) is at least about 0.5.

8. A hard butter composition of claim 6, wherein an (X)/(Y) weight ratio in said triglyceride component is at least about 1.3, provided that (X) represents the content of said saturated fatty acid residue having 18 to 22 carbon atoms and (Y) represents the content of palmitic acid residues.

9. A hard butter composition of claim 6, wherein a diglyceride having one or no unsaturated bond per molecule is contained in said hard butter composition in an amount of less than about 5% by weight.